# EUROPÄISCHE PATENTSCHRIFT

(11) **EP 2 621 873 B1**
(45) Veröffentlichungstag und Bekanntmachung des Hinweises auf die Patenterteilung: **08.11.2017**
(21) Anmeldenummer: 11767212.1
(22) Anmeldetag: 27.09.2011
(51) Int. Cl.: C04B 41/00, C04B 41/46, C04B 41/52, C04B 41/60, C04B 41/62, C04B 41/70

(54) **VERFAHREN ZUR ERZEUGUNG EINER OFFENPORIGEN, MIT WÄSSRIGEN SYSTEMEN BENETZBAREN, OBERFLÄCHENNAHEN SCHICHT EINES MIKROPORÖSEN, HYDROPHOBEN WÄRMEDÄMMFORMKÖRPERS**
METHOD FOR GENERATING AN OPEN-PORE NEAR-SURFACE LAYER OF A MICROPOROUS, HYDROPHOBIC MOLDED THERMAL INSULATION BODY AND WHICH IS WETTABLE WITH AQUEOUS SYSTEMS
PROCÉDÉ POUR PRODUIRE UNE COUCHE À PORES OUVERTS, MOUILLABLE PAR DES SYSTÈMES AQUEUX, PROCHE DE LA SURFACE, DANS UN CORPS MOULÉ CALORIFUGE HYDROPHOBE MICROPOREUX

(30) Priorität: 27.09.2010 DE 102010046678
(43) Veröffentlichungstag der Anmeldung: 07.08.2013
(73) Patentinhaber: Evonik Degussa GmbH, 45128 Essen (DE)
(72) Erfinder: KRATEL, Günter, 87471 Durach (DE); WEBER, Helmut, 85560 Ebersberg (DE); BORCHERT, Gerd, 87471 Durach (DE); MENZEL, Frank, 63456 Hanau (DE)
(86) Internationale Anmeldenummer: PCT/EP2011/066741
(87) Internationale Veröffentlichungsnummer: WO 2012/049018

(56) Entgegenhaltungen:
- EP-A1- 0 556 966

## Beschreibung

Die Erfindung betrifft ein Verfahren zur Erzeugung einer offenporigen, mit wässrigen Systemen benetzbaren, oberflächennahen Schicht eines mikroporösen, hydrophoben Wärmedämmformkörpers. Die Erfindung betrifft weiterhin ein Verfahren zum Aufbringen einer Schicht aus einem wässerigen System auf die Oberfläche eines mikroporösen, hydrophoben Wärmedämmformkörpers.

Mikroporöse Wärmedämmstoffe auf Basis pyrogener Kieselsäuren oder Kieselsäureaerogelen zeichnen sich neben ihrer Nichtbrennbarkeit und ihrer physiologischen Unbedenklichkeit vor allem durch eine hohe Wärmedämmwirkungen im Bereich von minus 200°C bis hin zu 1000°C aus. Mikroporöse Platten auf Basis pyrogener Kieselsäuren oder Aerogelen, Trübungsmittel, armierenden Fasern gelten seit Jahrzehnten als Stand der Technik und werden in zahlreichen Wärmedämmanwendungen erfolgreich eingesetzt.

Ein gravierender Nachteil ist dabei jedoch, dass diese Dämmstoffe im Kontakt mit flüssigem Wasser ihre Struktur und somit ihre Eigenschaften irreversibel verlieren. Auch eine nachträgliche vollständige Trocknung kann den Originalzustand nicht mehr herstellen.

Um diesen Nachteil auszugleichen wurden mikroporöse Dämmstoffe und Dämmstoffplatten entwickelt welche hydrophob, also wasserabweisend sind. So beschreiben zum Beispiel EP-A-1988228 A1 und DE-A-10 2010 005 800 Verfahren zur Herstellung hydrophober Wärmedämmplatten.

EP-A-556966 offenbart ein Verfahren zur Beschichtung einer Oberfläche eines hydrophobierten Wäremdämmmateriales, bei dem die Oberfläches des hydrophobierten Wäremdämmmateriales erhitzt wird und so eine hydrophile Oberfläche erzeugt wird und nachfolgend dies hydrophile Oberfläche beschichtet wird.

Es liegt nun in der Natur hydrophober, mikroporöser Platten, dass deren Oberflächen, gegenüber wasserhaltigen Klebern, Bindern oder Coatings abweisend, also inaktiv sind und daher eine Verbindung mit wässrigen Systemen nicht eingehen können.

Üblicherweise wird die Benetzbarkeit hydrophober Oberflächen durch Wasser durch den Zusatz oder Einsatz von organischen Netzmitteln wie haushaltsübliches Spülmittel hergestellt oder verbessert. Die Wasserabweisung der hydrophoben, mikroporösen Wärmedämmformkörper ist jedoch so stark ausgeprägt, dass diese Art der Behandlung nicht zielführend ist.

Die technische Aufgabe der vorliegenden Erfindung war es daher diese Wärmedämmformkörper mit einer Oberfläche zu versehen, die das Aufbringen weiterer, auch wässriger Schichten, ermöglicht.

Gegenstand der Erfindung ist ein Verfahren zur Erzeugung einer offenporigen, mit wässrigen Systemen benetzbaren, oberflächennahen Schicht eines mikroporösen, hydrophoben Wärmedämmformkörpers, bei dem man einen mikroporösen, hydrophoben Wärmedämmformkörper mit einer polaren, mit Wasser mischbaren Flüssigkeit behandelt.

Ein weiterer Gegenstand der Erfindung ist ein Verfahren zum Aufbringen einer Schicht aus einem wässerigen System auf die Oberfläche eines mikroporösen, hydrophoben Wärmedämmformkörpers bei dem man den mikroporösen, hydrophoben Wärmedämmformkörper mit einer polaren, mit Wasser mischbaren Flüssigkeit behandelt und im feuchten Zustand mit einem wässerigen System zur Reaktion bringt.

Die Verfahren werden bevorzugt so ausgeführt, dass die polare, mit Wasser mischbare Flüssigkeit aus der Gruppe bestehend aus Methanol, Ethanol, n-Propanol, iso-Propanol, n-Butanol und/oder iso-Butanol sowie deren Mischungen mit Wasser, wobei der Wassergehalt 50 Gew.-% nicht übersteigt, ausgewählt wird. Besonders bevorzugt ist ein Mischverhältnis Wasser: Alkohol, bei dem der Alkoholanteil wenigstens 90 Gew.-% ist.

Die Oberflächen der eingesetzten mikroporösen, hydrophoben Wärmedämmformkörper können durch Streichen, Besprühen oder Tauchen mit der alkoholischen Lösung getränkt und dann frisch in frisch mit einem Kleber zur Fixierung auf den Wandflächen versehen werden oder mit einer dekorativen Beschichtung auf der Wandseite überarbeitet werden. Im Bedarfsfalle kann zusätzlich mit einem Haftvermittler auf Basis einer Kunststoffdispersion in einer Konzentration von 1 - 50 Gew.-% Wirkstoff ebenfalls frisch in frisch vorbehandelt werden.

Eine weitere Möglichkeit besteht darin, die mit der alkoholischen Lösung behandelte Oberfläche noch zu mineralisieren. Hierzu kann die frische und klebrige Dispersionsbeschichtung mit feuergetrocknetem Quarzmehl oder klassierten Quarzsand abgestreut werden. Anschließend kann dann die Kleberschicht bzw. die dekorative Beschichtung aufgebracht werden.

Die erfindungsgemäße Behandlung mit einer alkoholischen Lösung bewirkt, dass eine oberste, dünne Schicht der Oberfläche des behandelten Wärmedämmformkörpers für den Zeitraum des Feuchtzustandes der Oberfläche, reaktiviert wird und somit für eine Beschichtung mit anderen, auch wässriger Materialien geeignet ist.

Die in den erfindungsgemäßen Verfahren eingesetzten wässerigen Systeme umfassen wässrige Anstriche, Putze, handelsübliche Baukleber, Spachtelmassen, kunststoffvergütete mineralische Kleber, Komponenten von Wärmedämmverbundsystemen für Innen - oder Außendämmung von Gebäuden auf Zementbasis oder anderer auf hydraulischer Abbindung beruhender Mechanismen, Kunststoffdispersionen und Silikate aufgebracht werden.

Die erfindungsgemäßen Verfahren können weiterhin einen Schritt zur Stabilisierung der Wärmedämmformkörper mit einer Kaschierung aus organischen oder anorganischen Vliesen oder Geweben umfassen. Dies kann auch zusätzlich vor einer Beschichtung mit den oben beschriebenen Materialien erfolgen. Die so erhaltene, stabilisierende und staubarme Oberfläche ist ebenfalls nicht wasserabweisend und kann daher weiter beschichtet werden.

Als Kaschiermaterialien können offenporige Vliese und Gewebe aus der Gruppe der organischen als auch der anorganischen Materialien eingesetzt werden. Das Flächengewicht liegt bevorzugt zwischen 10 und 200 g/m². Bevorzugt kommen Vliese und Gewebe aus Glas zum Einsatz. Diese Gewebe können auch beschichtet sein. Besonders bevorzugt eignen sich Glasvliese mit einem Flächengewicht von 25 - 80 g/m². Eine teilweise oder vollständige Kaschierung der Oberfläche mit metallischen Folien wie beispielsweise Aluminiumfolien oder organischen Folien wird ebenfalls praktiziert. Von Haus aus dichte Folien können vor oder nach der Kaschierung perforiert und somit offenporig gestaltet werden. Diese Folien können zusätzlich mit beschichtbaren Oberflächen ausgestattet sein. Die Beschichtung kann bei der Herstellung der Platten werksseitig erfolgen oder direkt vor Ort, wo der nach den erfindungsgemäßen Verfahren hergestellte Wärmedämmformkörper, in der Regel eine Wärmedämmstoffplatte auf ein Kleberbett auf die Bestandswand aufgedrückt wird und danach mit weiteren Schichten zur Rauminnenseite behandelt wird. Dies kann z.B. eine Folge von Haftvermittler, Geweben, Putzschicht und Edelputzschicht sein. Auch kann die erfindungsgemäße Platte mit einer oder mehreren Schichten aus Papier oder Karton oder metallischen oder organischen Folien beklebt werden. Eine Kombination mit mechanischen Befestigungssystemen wie Dübel oder Anker ist möglich.

Die in den erfindungsgemäßen Verfahren eingesetzten mikroporösen, hydrophoben Wärmedämmformkörper können eine Kieselsäure und/oder ein Siliciumdioxidaerogel umfassen oder aus ihnen bestehen. Bei der Kieselsäure handelt es sich bevorzugt um eine pyrogene Kieselsäure. Pyrogene Kieselsäuren werden durch Flammenhydrolyse von flüchtigen Siliciumverbindungen wie organischen und anorganischen Chlorsilanen hergestellt. Bei diesem Verfahren wird ein verdampftes oder gasförmiges, hydrolysierbares Siliciumhalogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Eine so hergestellte Kieselsäure wird als pyrogene Kieselsäure bezeichnet. Bei diesem Prozess werden zunächst Primärpartikel gebildet, die nahezu frei von inneren Poren sind. Diese Primärteilchen verschmelzen während des Prozesses über sogenannte "Sinterhälse" zu Aggregaten. Aufgrund dieser Struktur ist pyrogen hergestellte Kieselsäure ein idealer Wärmedämmstoff, da die Aggregatstruktur eine hinreichende mechanische Stabilität bewirkt, die Wärmeübertragung durch Festkörperleitfähigkeit über die "Sinterhälse" minimiert und eine ausreichend hohe Porosität erzeugt.

Der in dem erfindungsgemäßen Verfahren eingesetzte Wärmedämmformkörper kann weiterhin Trübungsmittel, Fasern und/oder feinteilige anorganische Zusatzstoffe enthalten.

Als Trübungsmittel kommen Titanoxide, Zirkonoxide, Ilmenit, Eisentitanat, Eisenoxide, Zirkonsilikat, Siliciumcarbid, Manganoxid und Ruß in Frage. Vorzugsweise weisen diese Trübungsmittel im Infrarot-Spektralbereich ein Maximum zwischen 1,5 und 10 µm auf. Die Partikelgröße dieser Teilchen liegt vorzugsweise zwischen 0,5 - 15 µm. Ihr Anteil an der Gesamtmischung beträgt bevorzugt 5 bis 20 Gew.-%.

Zur Armierung, also zur mechanischen Verstärkung, werden Fasern mit eingesetzt. Diese Fasern können anorganischen oder organischen Ursprungs sein und betragen bis zu 12 Gew.-% der Mischung. Beispiele einsetzbarer anorganischer Fasern sind Glaswolle, Steinwolle, Basalt-Fasern, Schlacken-Wolle und keramische Fasern, die aus Schmelzen von Aluminium und/oder Siliciumdioxid, sowie weiteren anorganischen Metalloxiden bestehen. Reine Siliciumdioxidfasern sind beispielsweise Silica-Fasern. Beispiele einsetzbarer organischer Fasern sind Cellulosefasern, Textilfasern oder Kunststofffasern. Der Durchmesser der Fasern beträgt bevorzugt 1-12 µm, besonders bevorzugt 6-9 µm und die Länge bevorzugt 1 - 25 mm, besonders bevorzugt 3-10 mm. Weiterhin können bei dem erfindungsgemäßen Verfahren anorganische Füllmaterialien zugesetzt werden. Zum Einsatz kommen können verschiedene, synthetisch hergestellte Modifikationen von Siliciumdioxid, wie gefällte Kieselsäuren, Lichtbogenkieselsäuren, SiO2-haltige Flugstäube, die durch Oxidationen von flüchtigem Siliciummonoxid, die bei der elektrochemischen Herstellung von Silicium oder Ferrosilicium entstehen. Ebenso Kieselsäuren, die durch Auslaugen von Silikaten wie Calciumsilicat, Magnesiumsilicat und Mischsilicaten wie Olivin mit Säuren hergestellt werden. Ferner können natürlich vorkommende SiO2-haltige Verbindungen wie Diatomenerden und Kieselguren zum Einsatz kommen. Ebenfalls können thermisch aufgeblähte Mineralien wie Perlite und Vermiculite, feinteilige Metalloxide wie Aluminiumoxid, Titandioxid, Eisenoxid zugesetzt werden.

Eine besondere Ausführungsform der Erfindung sieht vor, dass der mikroporöse, hydrophile Kieselsäure enthaltende Wärmedämm-Formkörper 45 - 95 Gew.-%, vorzugsweise 55 - 90 Gew.-%, pyrogenes Siliciumdioxid und/oder Siliciumdioxidaerogel, 5 - 20 Gew.-%, vorzugsweise 7 - 15 Gew.-%, Trübungsmittel, 5-35 Gew.-%, vorzugsweise 10-30 Gew.-% feinteilige anorganische Zusatzstoffe und 0 - 12 Gew.-%, vorzugsweise 1-5 Gew.-%, Fasern enthält.

Ein mikroporöser, hydrophober Wärmedämmformkörper, auf dessen Oberfläche eine Schicht aus einem wässerigen System aufgebracht ist, ist gemäß der erfindungsgemäßen Verfahren erhältlich.

Zusätzlich kann der Wärmedämmformkörper mit einer weiteren Umhüllung mit perforierter Schrumpffolie versehen sein. Hierdurch können diese Wärmedämmformkörper auch in stark alkalischer Umgebung eingesetzt werden. Auch ist die Fixierung von Distanzhaltern möglich, die einen Kontakt zu schädigenden Untergründen unterbinden. Einsatzgebiete für diese Wärmedämmformkörper sind unter anderem alle Anwendungen bei denen die Dämmmaterialien Feuchtigkeit oder Nässe ausgesetzt sind. Weiterhin können auch dekorative Oberflächenbeschichtungen aufgebracht werden, die neben thermischen- auch haptischen Anforderungen genügen. Der Wärmedämmformkörper kann zur Gebäudeinnen- und -außendämmung, als Bestandteil von Wärmedämmverbundsystemen, im Bereich der technischen Dämmung im Anlagen-, Ofen- und Kühlhausbau, in Haushaltsgeräten wie Kühl- und Tiefkühleinheiten, im Brandschutz und im Transportwesen verwendet werden.

Insbesondere eignet er sich für Dämmungen in Bauhohlsteinen und Bauelementen, Dämmungen bei mehrschaligen Bausteinen und Bauelementen, Kerndämmungen für Wärmedämmstoffverbundsysteme für die Innen- und Außendämmung von Gebäuden, Dämmungen bei zweischaligen Mauerwerken, Dämmungen von komplexen Konstrukionselementen im Bauwesen wie Fensterrahmen, Türbereichen, Balkonanschlüssen, Heiz-und Kühlleitungen im Fußboden, Wand und Deckenbereich, Dämmungen mit dekorativen Oberflächenbeschichtungen, Dämmungen im Ofen - und Anlagenbau in Verbindung mit nassen Baumaterialien, Dämmungen bei stark basischem Umfeld, Dämmungen im Anlagen und Apparatebau, Dämmung von Rohrleitungen im Innen- oder Außenbereich, Kerndämmungen für Vakuumisolationsplatten (VIP), Dämmungen in Kühlhäusern, Dämmungen für Haushaltsgeräte und Haushaltskühlgeräte, Dämmung für Transportbehälter, Brandschutzsysteme für den Innen- und Außenbereich.

### Beispiele

Beispiel 1: Eine gemäß EP-A-1988228, Mischung A hergestellte mikroporöse, hydrophobierte Platte mit den Maßen 300 x 300 x 30 mm wird mit einem Gemisch aus 90 Gew.-% Ethanol und 10 Gew.-% Wasser beidseitig besprüht. Beidseitig wird nun ein Glasvlies mit einem Flächengewicht von 30g/m² mit Kieselsol als Kleber aufgebracht. Nach der freien Trocknung ist das Vlies fest auf der hydrophoben Platte aufgeklebt, ist jedoch selbst nicht wasserabweisend. Diese Platte wird als dämmende Komponente in einem Wärmedämmverbundsystem verbaut und beidseitig mit wässrigen Mörteln, Spachtelmassen oder Putzen beaufschlagt.

Beispiel 2: Eine gemäß EP-A-1988228, Mischung A hergestellte mikroporöse, hydrophobierte Platte mit den Maßen 300 x 300 x 30 mm wird mit einem Gemisch aus 80 Gew.-% Ethanol und 20 Gew.-% Wasser einseitig besprüht. Auf die feuchte Oberfläche wird ein handelsüblicher Baukleber aufgebracht. Auf die ebenfalls mit Baukleber versehene Wand wird diese Platte dann im "buttering and floating- Verfahren" fixiert. Die zweite Seite wird nun ebenfalls besprüht. In die feuchte Oberfläche wird eine Kunststoffdispersion aufgetragen und mit feinem Quarzsand mineralisiert. Nach der Trocknung erfolgt das Aufbringen der mineralischen, dekorativen Oberflächenbeschichtung.

Beispiel 3 (außerhalb der Erfindung): Eine gemäß EP-A-1988228, Mischung A hergestellte mikroporöse, hydrophobierte Platte mit den Maßen 300 x 300 x 30 mm wird 5 min lang einer beidseitigen thermischen Behandlung bei 400°C ausgesetzt. Die Behandlung erfolgt, indem man die Platte für den beschriebenen Zeitraum in einen auf die angegebene Temperatur vorgeheizten Glühofen verbringt. Nach der Behandlung wird nun ein Glasvlies beidseitig mit einem Flächengewicht von 30g/m² mit Kieselsol als Kleber aufgebracht. Nach der freien Trocknung ist das Vlies fest auf der hydrophoben Platte aufgeklebt, ist jedoch selbst nicht wasserabweisend. Diese Platte wird als dämmende Komponente in einem Wärmedämmverbundsystem verbaut und beidseitig mit wässrigen Mörteln, Spachtelmassen oder Putzen beaufschlagt.

Beispiel 4 (außerhalb der Erfindung): Eine gemäß EP-A-1988228, Mischung A hergestellte mikroporöse, hydrophobierte Platte mit den Maßen 300 x 300 x 30 mm wird einseitig für wenige Sekunden beflammt. Nach der Temperaturbehandlung wird die Platte auf der behandelten Seite mit einer dünnen Schicht eines kapillar regulierenden Materials beschichtet. Diese Platte wird als dämmende Komponente in einem Wärmedämmverbundsystem verbaut, das in Anwendungen zur Geltung kommt, bei denen eine geregelte Diffusion von Feuchtigkeit durch die Dämmung notwendig ist, wie beispielsweise bei der Innendämmung von Gebäuden.

## Patentansprüche

1. Verfahren zur Erzeugung einer offenporigen, mit wässrigen Systemen benetzbaren, oberflächennahen Schicht eines mikroporösen, hydrophoben Wärmedämmformkörpers, bei dem man einen mikroporösen, hydrophoben Wärmedämmformkörper mit einer polaren, mit Wasser mischbaren Flüssigkeit behandelt.

2. Verfahren zum Aufbringen einer Schicht aus einem wässerigen System auf die Oberfläche eines mikroporösen, hydrophoben Wärmedämmformkörpers bei dem man den mikroporösen, hydrophoben Wärmedämmformkörper mit einer polaren, mit Wasser mischbaren Flüssigkeit behandelt und im feuchten Zustand mit einem wässerigen System zur Reaktion bringt.

3. Verfahren nach den Ansprüchen 1 oder 2, **dadurch gekennzeichnet, dass** die polare, mit Wasser mischbare Flüssigkeit aus der Gruppe bestehend aus Methanol, Ethanol, n-Propanol, iso-Propanol, n-Butanol und/oder iso-Butanol sowie deren Mischungen mit Wasser, wobei der Wassergehalt 50 Gew.-% nicht übersteigt, ausgewählt wird.

4. Verfahren nach den Ansprüchen 2 oder 3, **dadurch gekennzeichnet, dass** als wässerige Systeme wässrige Anstriche, Putze, handelsübliche Baukleber, Spachtelmassen, kunststoffvergütete mineralische Kleber, Komponenten von Wärmedämmverbundsystemen für Innen - oder Außendämmung von Gebäuden auf Zementbasis oder anderer auf hydraulischer Abbindung beruhender Mechanismen, Kunststoffdispersionen und Silikate aufgebracht werden.

5. Verfahren nach den Ansprüchen 1 bis 4, **dadurch gekennzeichnet, dass** der mikroporöse, hydrophobe Wärmedämmformkörper eine Kieselsäure und/oder ein Siliciumdioxidaerogel umfasst oder aus ihnen besteht.

6. Verfahren nach Anspruch 5, **dadurch gekennzeichnet, dass**
die Kieselsäure eine pyrogene Kieselsäure ist.

7. Verfahren nach den Ansprüchen 1 bis 6, **dadurch gekennzeichnet, dass** der eingesetzte mikroporöse, hydrophobe Wärmedämmformkörper weiterhin Trübungsmittel, Fasern und/oder feinteilige anorganische Zusatzstoffe enthält.

## Claims

1. Process for producing an open-pored near-surface layer of a microporous, hydrophobic moulded thermal insulation body, which layer is wettable by means of aqueous systems, wherein a microporous, hydrophobic moulded thermal insulation body is treated with a polar, water-miscible liquid.

2. Process for applying a layer from an aqueous system onto the surface of a microporous, hydrophobic moulded thermal insulation body, wherein the microporous, hydrophobic moulded thermal insulation body is treated with a polar, water-miscible liquid and is reacted in the moist state with an aqueous system.

3. Process according to Claim 1 or 2, **characterized in that** the polar, water-miscible liquid is selected from the group consisting of methanol, ethanol, n-propanol, isopropanol, n-butanol and/or isobutanol and also mixtures thereof with water, where the water content does not exceed 50% by weight.

4. Process according to Claim 2 or 3, **characterized in that** aqueous paints, plasters and renders, commercial building adhesives, knifing fillers, polymer-modified mineral adhesives, components of composite thermal insulation systems for interior or exterior insulation of buildings based on cement or other mechanisms based on hydraulic setting, polymer dispersions and silicates are applied as aqueous systems.

5. Process according to any of Claims 1 to 4, **characterized in that** the microporous, hydrophobic moulded thermal insulation body comprises or consists of a silica and/or a silicon dioxide aerogel.

6. Process according to Claim 5, **characterized in that** the silica is a pyrogenic silica.

7. Process according to any of Claims 1 to 6, **characterized in that** the microporous, hydrophobic moulded thermal insulation body further comprises opacifiers, fibres and/or finely divided inorganic additives.

## Revendications

1. Procédé pour la production d'une couche à pores ouverts, mouillable par des systèmes aqueux, proche de la surface, d'un corps moulé calorifuge hydrophobe microporeux, dans lequel on traite par un liquide polaire miscible à l'eau un corps moulé calorifuge hydrophobe microporeux.

2. Procédé pour l'application d'une couche à base d'un système aqueux sur la surface d'un corps moulé calorifuge hydrophobe microporeux, dans lequel on traite par un liquide polaire miscible à l'eau le corps moulé calorifuge hydrophobe microporeux et, à l'état humide, on le met en réaction avec un système aqueux.

3. Procédé selon la revendication 1 ou 2, **caractérisé en ce que** le liquide polaire miscible à l'eau est choisi dans le groupe constitué par le méthanol, l'éthanol, le n-propanol, l'isopropanol, le n-butanol et/ou l'isobutanol ainsi que des mélanges de ceux-ci avec l'eau, la teneur en eau n'excédant pas 50 % en poids.

4. Procédé selon l'une quelconque des revendications 2 et 3, **caractérisé en ce qu'**en tant que systèmes aqueux on applique des peintures à l'eau, des enduits à l'eau, des colles du commerce pour le bâtiment, des mastics, des colles minérales améliorées par adjonction de matières synthétiques, des composants de systèmes composites calorifuges pour isolation intérieure ou extérieure de constructions à base de ciment ou d'autres mécanismes reposant sur la prise hydraulique, des dispersions de matières plastiques et des silicates.

5. Procédé selon les revendications 1 à 4, **caractérisé en ce que** le corps moulé calorifuge hydrophobe macroporeux comprend une silice et/ou un aérogel de dioxyde de silicium ou est constitué de ceux-ci.

6. Procédé selon la revendication 5, **caractérisé en ce que** la silice est une silice pyrogénée.

7. Procédé selon les revendications 1 à 6, **caractérisé en ce que** le corps moulé calorifuge hydrophobe macroporeux utilisé contient en outre des opacifiants, des fibres et/ou des additifs inorganiques finement divisés.
